# EUROPÄISCHE PATENTANMELDUNG

(11) **EP 2 458 206 A1**
(43) Veröffentlichungstag der Anmeldung: **30.05.2012**
(21) Anmeldenummer: 10014977.2
(22) Anmeldetag: 25.11.2010
(51) Int. Cl.: F03D 11/00, G01B 11/16

(54) **Einrichtung und Verfahren zur Messung der Verformung eines Rotorblatts bei Belastung und zur Fehlerkompensierung**

(71) Anmelder: Baumer Innotec AG, 8501 Frauenfeld (CH)
(72) Erfinder: Weigel, Michael, 88142 Wasserburg (DE); Tiedeke, Joachim, 8280 Kreuzlingen (CH)
(74) Vertreter: Strauss, Steffen

(57) **Zusammenfassung**

Die Erfindung betrifft eine Einrichtung zur Verformung eines Rotorblatts (2) bei Belastung, bei welcher die Verdrehung und getrennt davon lateralen Verschiebung einer Sender- /Empfängereinheit (3,4) gemessen wird und der ansonsten durch die Verdrehung vorhandene Messfehler kompensiert wird.

## Beschreibung

### Beschreibung

### Gebiet der Erfindung

Die Erfindung bezieht sich auf eine Einrichtung sowie auf ein Verfahren zur Messung der Verformung eines Rotorblatts bei Belastung, insbesondere des Rotorblatts einer Windkraftanlage.

### Hintergrund der Erfindung

Rotorblätter, insbesondere Rotorblätter von Windkraftanlagen unterliegen hohen Belastungen. Diese werden in der Regel aus faserverstärkten Kunststoffen hergestellt und erfahren bei hohen Windgeschwindigkeiten einen hohen Durchbiegungsgrad. Hierdurch kann die Struktur des Rotorblatts geschädigt werden. Weiter kann es schlimmstenfalls dazu kommen, dass das gebogene Rotorblatt gegen einen Mast der Anlage stößt oder dass es sogar bricht.

Es ist daher bekannt, die Verformung, insbesondere die Biegung, eines Rotorblatts zu überwachen, um bei zu hoher Belastung durch Verstellung des Anstellwinkels des Rotorblatts die Belastung verringern zu können. Bei hohen Windgeschwindigkeiten muss die Anlage ganz abgeschaltet werden.

Eine derartige Einrichtung zur Messung der Verformung eines Rotorblatts zeigt beispielsweise die deutsche Patentschrift DE 10 2006 002 708 B4.

Dabei ist in der Nähe der Nabe des Rotorblatts eine Sender-/Empfängereinheit, bestehend aus einer Lichtquelle, vorzugsweise einer LED oder einer Laserdiode und einem ortsauflösenden, bildgebenden Sensor (beispielsweise CCD, CMOS) zusammen mit einem abbildenden System, angebracht.

Beabstandet von der Sender-/Empfängereinheit befindet sich ein Retroreflektor, insbesondere ein Tripel-Spiegel oder ein Array von Tripelspiegel, oder anderen retroreflektierenden Lösungen, über den das vom Sender ausgestrahlte Licht auf den ortsauflösenden Sensor reflektiert wird. Anhand der Position des Lichtpunktes auf dem ortsauflösenden Sensor kann die Verformung des Rotorblatts bestimmt werden.

Der Ort der Abbildung auf dem ortsauflösenden Sensor ist dabei proportional zu den Winkeln der Reflektoren zur optischen Achse des abbildenden Systems.

Mit einem solchen System kann auf relativ einfache Weise die Durchbiegung des Rotorblatts bestimmt werden.

Es hat sich allerdings gezeigt, dass, auch wenn die Sender-/Empfängereinheit nahe an der Nabe des Rotors angeordnet ist, sich der Bereich, in dem sich die Sender-/Empfängereinheit befindet, ebenfalls verformt. Typischerweise ist die Sender-/Empfängereinheit an einem Schott (der sog. Plattform) des Rotorblatts angeordnet, welches sich zwischen dem Flansch und dem eigentlichen Rotorblatt erstreckt. Ein derartiges Schott soll verhindern, dass größere Mengen von Wasser oder herumfliegende Teile in die Nabe des Rotors gelangen und so mechanische Schäden verursachen. In dem Bereich zwischen Nabe und Schott ist das Rotorblatt üblicherweise im Wesentlichen zylindrisch ausgebildet, besitzt also keine Blattstruktur, welche von der Luft angeströmt wird und so zur Rotation der Windkraftanlage beiträgt. Der Bereich zwischen Nabe und Schott ist daher in der Regel relativ steif.

Dennoch kann es bei, insbesondere am Schott angeordneten Sender-/Empfängereinheiten zu einer leichten Verdrehung und lateralen Verschiebung der Sender-/Empfängereinheit relativ zur Hauptachse des Rotorblatts kommen, derart, dass die Messung auf den Reflektor nicht mehr proportional zur Durchbiegung des Rotorblatts ist. Bei Verwendung eines Tripel-Spiegels reicht der vom Sender ausgehende Messbereich zwar in der Regel aus, um dennoch eine Messung vornehmen zu können.

Aufgrund der Winkelabweichung und lateralen Verschiebung der Sender-/Empfängereinheit kommt es allerdings zu einem Messfehler, der die Genauigkeit der Messung verringert.

Im Detail kommt dieser Messfehler in der Regel dadurch zustande, dass es zu einer elliptischen Verformung des im Flanschbereich in der Regel kreiszylinderförmig, also im Querschnitt rund ausgebildeten Teil des Rotorblatts, kommt. Diese Verformung führt auch zu einer Verformung des Schotts wodurch eine daran befestigte Sender-/Empfängereinheit die Ausrichtung ändert. Da das vorstehend beschriebene Messprinzip darauf beruht, eine Winkeländerung zu messen, wirkt sich die Verformung in Form eines Winkelfehlers unmittelbar als Messfehler aus.

### Aufgabe der Erfindung

Der Erfindung liegt demgegenüber die Aufgabe zugrunde, die genannten Nachteile des vorstehend beschriebenen Standes der Technik zumindest zu reduzieren.

Es ist insbesondere eine Aufgabe der Erfindung, den aufgrund einer Verdrehung und/oder einer lateralen Verschiebung einer Sender- und/oder Empfängereinheit auftretenden Messfehler zu kompensieren.

### Zusammenfassung der Erfindung

Die Aufgabe der Erfindung wird bereits durch eine Einrichtung zur Messung der Verformung eines Rotorblatts bei Belastung sowie durch ein Verfahren zur Messung der Verformung eines Rotorblatts nach einem der unabhängigen Ansprüche gelöst.

Bevorzugte Ausführungsform und Weiterbildungen der Erfindung sind den jeweiligen Unteransprüchen zu entnehmen. Die Erfindung betrifft eine Einrichtung zur Messung der Verformung eines Rotorblatts bei Belastung, insbesondere des Rotorblatts einer Windkraftanlage.

Die Einrichtung umfasst zumindest einen am Rotorblatt angeordneten Sensor und zumindest einen Empfänger.
Empfänger und Sensor können, wie es bei einer Ausführungsform der Erfindung vorgesehen ist, auch in einer Baugruppe integriert sein.

Sender und Empfänger sind vorzugsweise als bildgebendes System ausgebildet. Es ist aber denkbar, auch auf andere Messverfahren zurückzugreifen.

Beispielsweise kann eine Sender-/Empfängereinheit in der Nähe der Nabe am Rotorblatt angeordnet.

Von dem Sender und Empfänger beabstandet ist am Rotorblatt ein Reflektor angebracht, welcher das vom Sender ausgestrahlte Signal, insbesondere das Licht einer Leuchtdiode, zurückwirft.

Da das Messprinzip darauf beruht, die Positionsänderung eines Messpunktes gegenüber einer Bezugsachse beziehungsweise einem Bezugskoordinatensystem zu erfassen und so auf die Verformung des Rotorblatts rückzuschließen, ist ersichtlich, dass ein Signal von dem Messpunkt zu einem Empfänger laufen muss.
Dies ist beispielsweise mit dem vorstehend beschriebenen Reflektor möglich.

Es ist aber auch möglich, den Sender, etwa in Form einer Lichtquelle, an den Messpunkt zu setzen. Diese

Ausführungsform der Erfindung ist zwar in der Regel etwas aufwändiger, aber auch gegenüber störenden Außeneinflüssen wie Beschlag, Staub oder Regen weniger störempfindlich.

Es versteht sich, dass der Begriff "Messpunkt" der idealisierten Darstellung eines Koordinatensystems dient und die Signalquelle selbst als dreidimensionale Vorrichtung kein Punkt im mathematischen Sinne ist.

Gemäß der Erfindung weist die Einrichtung Mittel zur Messung einer Verdrehung und/oder lateralen Verschiebung des Senders und/oder des Empfängers zu einer Bezugsachse auf. Durch die Bestimmung des Winkelfehlers vom Sender und/oder Empfänger bei einer Verdrehung derselben und der lateralen Verschiebung kann der Fehler bestimmt werden und in die Berechnung der Verformung, insbesondere Durchbiegung des Rotorblatts eingehen und so kompensiert werden. Unter einer Verdrehung wird eine Winkelabweichung des Senders und/oder Empfängers gegenüber der Position im unbelasteten Zustand bzw. gegenüber einer Bezugsachse des Rotorblatts verstanden. Der laterale Fehler ist die Verschiebung des Hauptpunkts der Empfangsoptik in der Ebene senkrecht zur Rotorblattbezugsachse.

Als Bezugsachse wird jede beliebige Achse verstanden, die als Referenz dienen kann, um eine Positionsänderung des Messpunktes und damit eine Verformung des Rotorblatts zu bestimmen.

Bei einer bevorzugten Ausführungsform der Erfindung umfassen die Mittel zur Messung einer Verdrehung und/oder lateralen Verschiebung einen Lichtstrahl, welcher von einem Referenzpunkt auf einen Flächensensor gerichtet ist.

Bei einer Ausführungsform der Erfindung ist die Einrichtung derart ausgebildet, dass eine Messung der Verdrehung des Senders und/oder Empfängers unabhängig von dessen lateraler Position vorgenommen wird.

Insbesondere wird der Lichtstrahl mittels eines Referenzkollimators auf einem Flächensensor abgebildet. So kann der Lichtstrahl mittels des Referenzkollimators ins Unendliche projiziert werden und mittels eines weiteren Kollimators, insbesondere einer Sammellinse, auf den Flächensensor abgebildet werden. Durch diese Anordnung ist sichergestellt, dass eine Positionsänderung des Lichtpunktes auf dem Flächensensor nur der Verdrehung des Empfänger entspricht und nicht durch eine möglicherweise gleichzeitige laterale Verschiebung verfälscht wird.

Die laterale Verschiebung kann gleichzeitig über einen weiteren Kanal gemessen werden, was in meisten Anwendungsfällen aber nicht nötig ist, da für eine hinreichend genaue Messung eine Kompensation des durch die Verdrehung verursachten Messfehlers möglich ist.

Auch kann, wie es bei einer weiteren Ausführungsform denkbar ist, anhand des Intensitätsprofils auf einem Flächensensor oder einem Hartmann-Shack Sensor, umfassend einen Flächensensor und ein Kollimatorarray, auf die laterale Verschiebung rückgeschlossen werden, ohne dass hierfür weitere Mittel wie ein weiterer Flächensensor erforderlich sind.

Neben der Position eines Referenzpunktes auf dem Sensor kann über einen zweiten Kanal das Intensitätsprofil bestimmt werden, um neben dem Verdrehwinkel auf die laterale Verschiebung rückzuschließen.

Der Referenzkollimator kann insbesondere eine LED-Lichtquelle umfassen oder durch einen vom Sender oder Empfänger beleuchteten Retroreflektor gebildet werden.

Die Mittel zur Messung einer Verdrehung und/oder lateralen Verschiebung können einen Reflektor und/oder eine Lichtquelle umfassen, welche in der Nähe der Nabe des Rotorblatts gegenüber Sender und/oder Empfänger in geringerem Abstand als der Referenzpunkt angeordnet ist.

Insbesondere kann ein Referenzpunkt, der als Ursprung eines Koordinatensystems zur Bestimmung der Verformung dient, an der Nabe des Rotors angeordnet sein.

Zur Erfassung des Referenzpunktes kann der Empfänger einen Sensor mit einem zweiten Messkanal umfassen, der auf den Referenzpunkt ausgerichtet ist.

Der Referenzpunkt, in dessen unmittelbarer Nähe ein Reflektor oder Sender angeordnet ist, ist vorzugsweise an einer Stelle vorgesehen, welche gegenüber der Stelle an welcher die Verformung gemessen wird, also dem Messpunkt, im belasteten Zustand eine kleinere Positionsabweichung aufweist.

Der Empfänger liegt somit vorzugsweise zwischen einem nabenseitig angeordneten Referenzpunkt und einem flügelseitig angeordneten Messpunkt.
Bei einer einfachen Ausführungsform der Erfindung wird die Erfassung einer Verdrehung vom Sender und/oder Empfänger mittels eines weiteren Reflektors und Sender/Empfängerkanals vorgenommen, welcher gegenüber dem Sender und/oder Empfänger im geringeren Abstand als der erstgenannte Reflektor angebracht ist. Es ist also ein Referenzpunkt beziehungsweise eine Referenzmarke vorgesehen, welcher vorzugsweise in der Nähe oder an der Nabe des Rotors angeordnet ist. Der weitere Reflektor, im Folgenden auch als Referenzreflektor bezeichnet, befindet sich damit vorzugsweise in einem Bereich, welcher allenfalls eine geringe Verformung bei Belastung erfährt. Weiter ist auch denkbar, das Verhältnis einer Verformung des Rotorblatts im Bereich des Referenzreflektors zu der Verformung des Reflektors zu bestimmen und in die Messung einfließen zu lassen.

Vorzugsweise befindet sich der Referenzreflektor aber im nabennahen Bereich, so dass die Verformung des Bereiches, in dem der Referenzreflektor angeordnet ist, vernachlässigt werden kann.

Der weitere Reflektor ist vorzugsweise an einer Stelle des Rotors angeordnet, welche gegenüber der Stelle, an der der andere Reflektor angebracht ist, im belasteten Zustand eine kleinere Positionsabweichung, mithin eine kleinere Durchbiegung, erfährt.

Die Bestimmung der Verdrehung des Senders und/oder Empfängers über den zweiten Reflektor erfolgt vorzugsweise ebenfalls optisch, insbesondere ebenfalls mittels einer Leuchtdiode und/oder mittels eines Flächensensors, wie beispielsweise eines CCD- oder CMOS-Empfängers.

Der Sender ist vorzugsweise als Lichtquelle, insbesondere als Leuchtdiode bzw. eine Mehrzahl von Leuchtdioden ausgebildet. Diese ist energiesparend und das monochromatische Licht lässt sich besser vom Umgebungslicht unterscheiden, so dass die Gefahr, dass der Empfänger durch Umgebungslicht beeinträchtigt wird, reduziert wird.

Der Reflektor sowie der Referenzreflektor sind vorzugsweise als Tripelspiegel, Tripelprisma, Array von Tripel-Spiegeln oder Tripel-Prismen, bzw. geeigneten Retroreflektoren ausgebildet.

Nachteilig bei dieser Ausführungsform ist insbesondere, dass besonders dann, wenn der Abstand des Referenzpunktes, im Folgenden auch als Referenzmarke bezeichnet, zum Sender/Empfängerkanal sehr viel kleiner ist als der Abstand des Messpunktes, im Folgenden auch als Messmarke bezeichnet, zum Sender/Empfängerkana14, sich im Referenzpfad laterale Verschiebung und Verdrehung nicht trennen lassen. Eine laterale Verschiebung von Sender/Empfängerkanal relativ zur Referenzmarke hat aufgrund des kleinen Abstands die gleiche Wirkung wie eine Verdrehung.

Bei den relativ großen Distanzen der Messmarke zum Sensor wirkt sich primär eine Verdrehung des Sensors nachteilig aus und nur diese muss in erster Näherung korrigiert werden.

Eine Weiterbildung der Erfindung bezieht sich daher darauf, sicherzustellen, dass nur eine Verdrehung von einem zweiten Messkanal erfasst wird und die laterale Verschiebung die Kompensationsmessung nicht verfälscht.

Hierfür kann statt einer Lichtquelle ohne Abbildungsoptik ein Referenzkollimator eingesetzt. Dieser ist so aufgebaut, dass eine Lichtquelle, bevorzugterweise eine LED oder eine Laserdiode, über eine geeignete Optik ins Unendliche abgebildet wird (kollimierter Strahl). Die Empfangsoptik im Referenzpfad bzw. der Vorrichtung zur Ermittlung der Verdrehung von Empfänger/Sender ist ebenfalls so eingestellt, dass diese Bilder, die aus dem Unendlichen kommen, auf den ortsauflösenden Flächensensor (vorzugsweise einen CCD-, CMOS-Empfänger, PSD oder vier-Quadranten Dioden) abbildet. So lange der Strahl des Referenzkollimators die Apertur der Empfangsoptik des Referenzpfades ausreichend ausleuchtet, kann so der reine Winkelfehler vom mechanischen Aufbau des Sender/Empfängerkanal zur Referenzfläche bestimmt werden. Der Verdrehwinkel ist proportional zur Spotposition auf dem Empfänger. Die so ermittelten Winkelfehler zur Referenzfläche können zur Korrektur des Messwertes hinsichtlich des Winkelfehlers verwendet werden. Empfänger und die Vorrichtung zur Messung der Verdrehung sind mechanisch miteinander verbunden.

Um zusätzlich zum Winkelfehler auch noch die laterale Verschiebung erfassen zu können, kann in einer Weiterbildung über einen an sich bekannten "Hartmann-Shack" Sensor die Energieverteilung in der Wellenfront des Ausgangssignals des Referenzkollimators analysiert werden. Jedes einzelne Element wirkt grundsätzlich in gleicher Art wie der weiter oben beschriebene Kollimatoraufbau. Durch das inhomogene Strahlprofil des kollimierten Strahls lässt sich nun durch die Messung der Energie der einzelnen Punkte und einer Schwerpunktbildung oder die Anwendung der Energiedaten auf das Modell des Strahlprofils die laterale Lage des Strahls relativ zum Hartmann-Shack Sensor bestimmen.

Durch die Kenntnis der Geometrie von des Aufbaus, insbesondere des Vektors vom mechanischen Angreifpunkt des Aufbaus zur Microlinsenarray lassen sich Verdrehung und, wie es bei vorstehend beschriebener Weiterbildung der Erfindung möglich ist, auch die laterale Verschiebung bestimmen.

In einer Weiterbildung der Erfindung wird die Lichtquelle mit einem Reflektor ersetzt und die Vorrichtung zur Messung der Verdrehung des Sender/Empfängerkanals mit einer aktiven Beleuchtung ergänzt.

Bei einer Weiterbildung der Erfindung weisen Sender und/oder Empfänger Mittel zur drahtlosen Übertragung von Messsignalen auf. So ist es nicht erforderlich, im Bereich der Nabe Kabeldurchführungen vorzusehen.

Bei einer Weiterbildung der Erfindung weist die Sender-/Empfängereinheit und/oder der Referenzkollimator Mittel zur Stromerzeugung auf, um sich selbst mit Energie zu versorgen. Derartige, nach dem Prinzip des ,,Energy Harvesting" arbeitende Systeme sind bekannt.

Eine weitere Weiterbildung besteht darin, dass die Reflektoren nicht als Retroreflektoren ausgebildet sind, sondern selbst eine Lichtquelle und Mittel zur Stromerzeugung aufweisen. Dies erhöht die Robustheit gegenüber Verschmutzung, Beschlag und Vereisung. Ein solcher aktiver Reflektor kann entweder durch ein Signal, beispielsweise einem in Richtung des Reflektors gesendeten Lichtpulses, synchron zur Belichtung des Sensors getriggert werden, oder der Sensor synchronisiert die Belichtung des Detektors mit der Pulsfrequenz des aktiven Reflektors.

Es handelt sich dabei beispielsweise um Piezo-elektrisch funktionierende Systeme, welche durch die Drehung des Rotors Energie gewinnen, um diese in Strom umwandeln zu können. Aber auch andere Einrichtungen zur Erzeugung von Energie, wie beispielsweise Photozellen, sind denkbar.

So braucht die Sender-/Empfängereinheit, oder auch der aktive Reflektor, nicht mit Batterien bestückt zu werden und es sind ferner keine Kabeldurchführungen zur Stromversorgung erforderlich.

Die Erfindung betrifft des Weiteren ein Verfahren zur Messung der Verformung eines Rotorblatts, insbesondere mittels einer vorstehend beschriebenen Einrichtung.

Mittels eines Senders wird ein Signal, insbesondere ein Lichtstrahl über einen Reflektor oder direkt auf einen Empfänger gesendet und so die Verformung des Rotorblatts, insbesondere die Verbiegung des Rotorblatts, anhand einer Positionsänderung des empfangenen Signals bestimmt. Gemäß der Erfindung wird die Verdrehung eines Senders und/oder eines Empfängers bestimmt, indem ein Referenzpunkt auf einen Flächensensor des Empfängers abgebildet wird.

Insbesondere wird mittels einer Optik ein kollimierter Lichtstrahl erzeugt und mittels einer weiteren Optik wird ein Lichtpunkt auf dem Flächensensor erzeugt. Die Position dieses Lichtpunktes ist, jedenfalls sofern sich der Flächensensor noch im Erfassungsbereich befindet, im Wesentlichen unabhängig von einer gleichzeitigen möglichen lateralen Verschiebung des Empfängers.

### Beschreibung der Zeichnungen

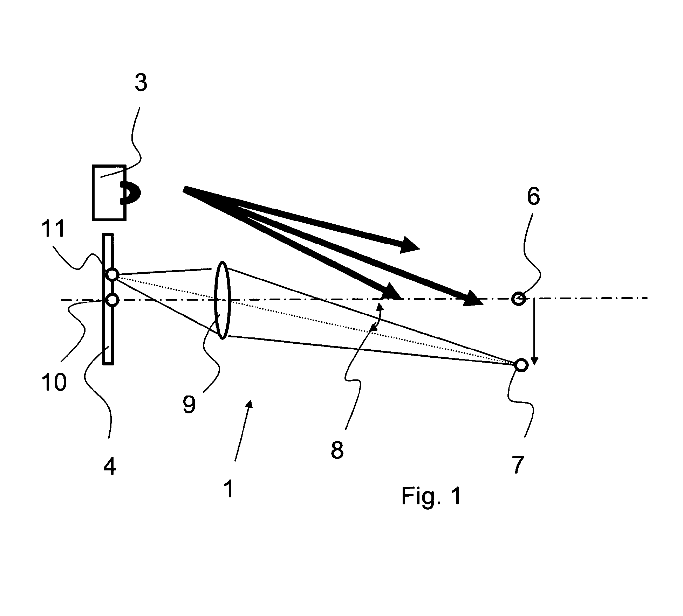

Die Erfindung soll im Folgenden anhand schematisch dargestellter Ausführungsbeispiele Bezug nehmend auf die Zeichnungen Fig. 1 bis Fig. 11 näher erläutert werden.

Bezug nehmend auf Fig. 1 soll schematisch ein erstes Messprinzip zur Bestimmung der Vorformung eines Rotorblatts erläutert werden.

Schematisch dargestellt ist eine Einrichtung zur Messung der Verformung eines Rotorblatts 1.

Die Einrichtung zur Messung der Verformung eines Rotorblatts 1 umfasst einen Sender 3, hier in Form einer Leuchtdiode, sowie einen Empfänger 4, hier in Form eines CCD- oder CMOS Empfängers.

Über den Sender 3 wird Licht abgestrahlt, welches von einem (oder mehreren) am Rotorblatt angeordneten Retroreflektor reflektiert wird.

Hier dargestellt ist im unbelasteten Zustand eine Reflektorposition 1, welche mit Bezugszeichen 6 bezeichnet ist. In dieser Position liegt der Retroreflektor genau mittig gegenüber dem Empfänger 4. Die Position des Lichtpunktes im unbelasteten Zustand ist mit Bezugszeichen 10 gekennzeichnet.

Im belasteten Zustand, für den der Strahlengang eingezeichnet ist, verschiebt sich die Position des Retroreflektor auf die mit Bezugszeichen 7 bezeichnete Position. In der Folge wandert der über eine Linse 9 auf den Empfänger projizierte Lichtpunkt auf die mit Bezugszeichen 11 bezeichnete Position. Der Reflektionswinkel 8 kann so bestimmt werden und anhand dieses Winkels und des bekannten Abstands zum Retroreflektor direkt die Verformung des Rotorblatts an der Stelle des Retroreflektors oder der Retroreflektoren berechnet werden.

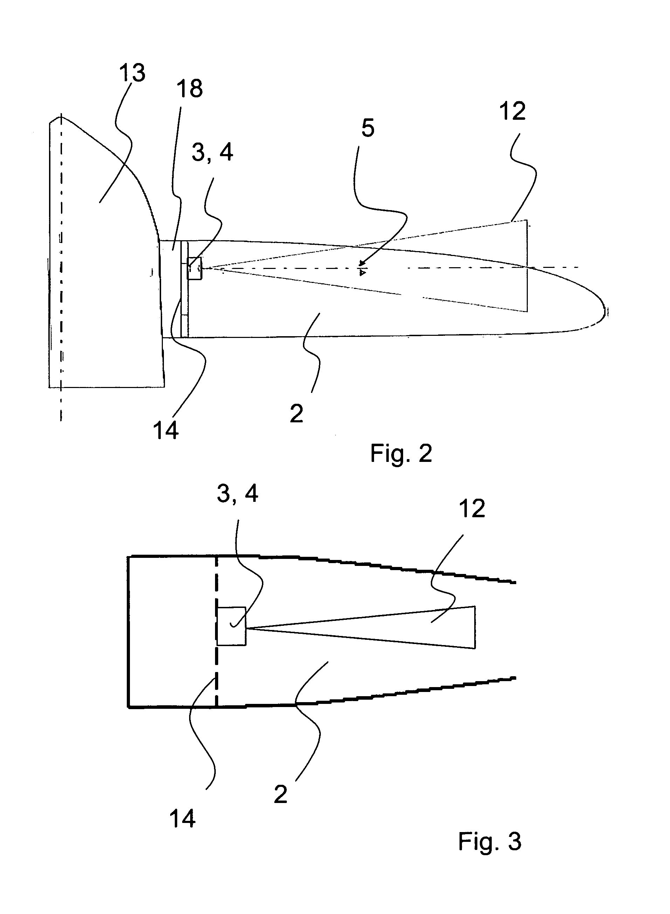

In Fig. 2 ist schematisch ein Rotorblatt 2 dargestellt, welches mit einer Sender-/Empfängereinheit 3, 4 versehen ist.

Das Rotorblatt 2 ist mittels eines Flansches 18 in der Nabe 13 einer Windkraftanlage befestigt. Die Sender-/Empfängereinheit 3, 4 ist beispielsweise an einem Schott (Plattform) 14 angebracht, welches an den Flansch 18 angrenzt. Es ist jedoch jede andere Position möglich. Voraussetzung ist ein freies Sichtfeld zu den Retroreflektoren. Insbesondere wäre auch eine Montage direkt in der Nabe bzw. dem Flansch denkbar.

Von der Sender-/Empfängereinheit 3, 4 beabstandet befindet sich ein Retroreflektor 5, hier schematisch in Form eines Tripel-Spiegels, der das vom Sender 3 abgestrahlte Licht auf die Sender-/Empfängereinheit 3, 4 zurück reflektiert. Der von dem Sender in Form einer Leuchtdiode ausgehende Lichtkegel ist grösser oder gleich des vom Empfänger vorgegebnen Messbereichs. Der hier schematisch eingezeichnete Messbereich ist so groß, dass der Reflektor 5 nicht aus dem Messbereich wandern kann.

Fig. 3 zeigt, schematisch dargestellt, das Prinzip der an dem Schott (Plattform) 14 angebrachten Sender-/Empfängereinheit 3, 4, welche einen Lichtkegel, der den Messbereich 12 definiert, auf das Rotorblatt 2 abstrahlt.

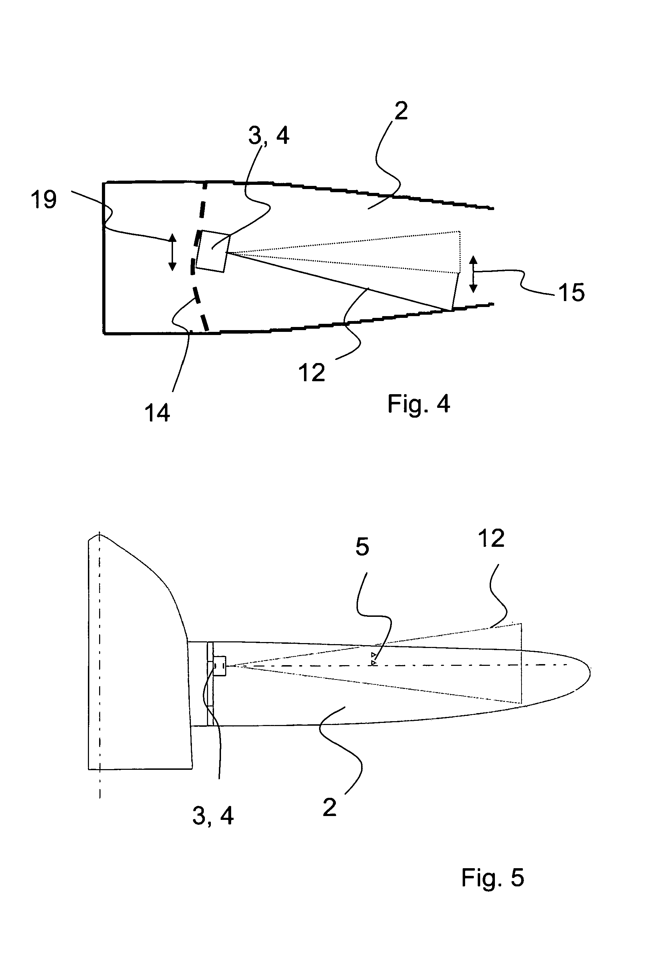

Fig. 4 zeigt, ausgehend von Fig. 3, als Prinzipskizze die Verformung des Schotts (Plattform) 14 bei Belastung, welche zu einer Verdrehung, also zu einer Winkelabweichung der Sender-/Empfängereinheit 3, 4 und einer lateralen Verschiebung gegenüber der Position im unbelasteten Zustand führt. Zu sehen ist, dass der Messbereich 12 nicht mehr genau auf der Achse des Rotorblatts 2 liegt, sondern gewandert ist. Die Richtungsänderung ist mit dem Pfeil 15 dargestellt. Die Wirkung der lateralen Verschiebung ist mit dem Pfeil 19 dargestellt. Es versteht sich, dass die hier dargestellten Verformungen und laterale Verschiebung stark übertrieben dargestellt ist, und es sich außerdem hierbei um ein dreidimensionales Problem handelt.

Fig. 5 zeigt analog zur Fig. 2, das Rotorblatt 2 im belasteten Zustand. Aufgrund der Verdrehung der Sender-/Empfängereinheit 3, 4 ist der Messbereich 12 in dieser Ansicht leicht nach unten gewandert. Der Reflektor 5 befindet sich immer noch im Messbereich 12, allerdings kommt es durch die Verdrehung der Sender-/Empfängereinheit 3, 4 und dem damit verbundenen Winkelfehler zu einem Messfehler.

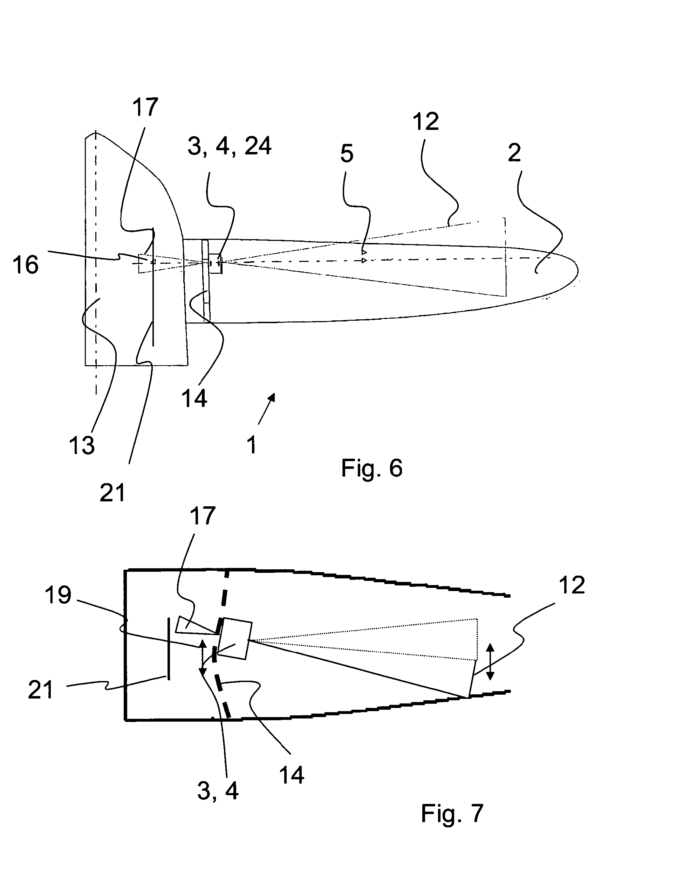

Fig. 6 zeigt, schematisch dargestellt, wie gemäß einer Ausführungsform der Erfindung der Messfehler durch eine Verdrehung der Sender-/Empfängereinheit 3, 4 kompensiert werden kann. Hierzu ist auf der Nabe 13 des Rotors ein weiterer Reflektor 16 als Referenzreflektor angeordnet. Der Effekt einer lateralen Verschiebung überlagert sich hier mit der Wirkung einer Verdrehung und kann nicht getrennt werden.

Über einen zweiten Kanal der am Schott (Plattform) 14 angeordneten Sender-/Empfängereinheit wird ein Messbereich mit zugehöriger Beleuchtung auf den Referenzreflektor 16 gerichtet. Der Messbereich ist durch Bezugszeichen 17 gekennzeichnet. Ansonsten entspricht die Messung der Verformung den in Fig. 4 und Fig. 5 dargestellten Ausführungsformen.

Da die Verdrehung der Sender-/Empfängereinheit 3, 4 optisch durch den vom Reflektor 16 zurückreflektierten Lichtpunkt bestimmt werden kann, kann diese bei der Bestimmung der Verformung des Rotorblatts 2 berücksichtigt werden und wirkt sich nicht als systematischer Messfehler aus. Eine Korrektur ist nur möglich, wenn nicht gleichzeitig eine signifikante laterale Verschiebung überlagert ist.

Fig. 7 zeigt, schematisch dargestellt, das Messprinzip. Aufgrund einer Verdrehung des Schotts (Plattform) 14 ist auch die Sender-/Empfängereinheit 3, 4 verdreht, wodurch sich der Messbereich 12 verschiebt.

Aufgrund des zweiten Messkanals mit dem Messbereich 17 kann die Verdrehung der Sender-/Empfängereinheit 3, 4 bestimmt werden und so in die Berechnung der Verformung des Rotorblatts eingehen. Bei großen Distanzen ist der durch laterale Verschiebungen 19 eingebrachte Fehler nicht signifikant. Bei kleinen Distanzen, wie dies auf dem Referenzpfad 17 wahrscheinlich ist, überlagert eine laterale Verschiebung 19 die Messung des Winkelfehlers. Eine Trennung der Effekte ist nicht möglich, wäre aber für die Erreichung einer hohen absoluten Genauigkeit wünschenswert. Es versteht sich, dass auch andere Systeme verwendet werden können, um die Verdrehung der Sender-/Empfängereinheit zu bestimmen. Grundsätzlich kann jede Technik verwendet werden, mit der zwei Winkel zu einer Referenzebene gemessen werden können.

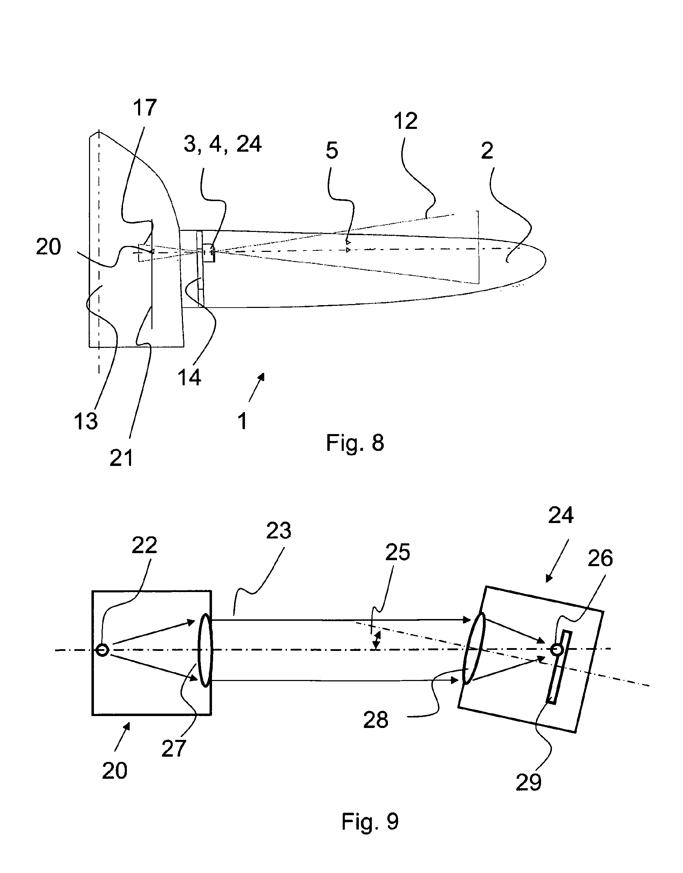

Fig. 8 zeigt, schematisch dargestellt, wie gemäß einer weiteren Ausführungsform der Erfindung der Messfehler durch eine Verdrehung der Sender-/Empfängereinheit 3, 4 kompensiert werden kann. Hierzu ist auf der Nabe 13 des Rotors ein Referenzkollimator 20 auf einer Referenzfläche 21 angeordnet. Der Effekt einer lateralen Verschiebung überlagert sich auch hier mit der Wirkung einer Verdrehung, wird bei dieser Ausführungsform der Erfindung aber nicht mitgemessen.

Über einen zweiten Kanal der am Schott (Plattform) 14 angeordneten Sender-/Empfängereinheit 3,4 mit einem Sender/Empfängerkanal 24 wird ein Messbereich und ggf. zugehöriger Beleuchtung auf einen Referenzkollimator 20 gerichtet. Der Messbereich ist durch Bezugszeichen 17 gekennzeichnet. Ansonsten entspricht die Messung der Verformung der in Fig. 4 und Fig. 5 dargestellten Ausführungsform.

Da die Verdrehung der Sender-/Empfängereinheit 3, 4 optisch durch eine Vermessung des Referenzkollimators 20 bestimmt werden kann, kann diese bei der Bestimmung der Verformung des Rotorblatts 2 berücksichtigt werden und wirkt sich nicht als systematischer Messfehler aus. Dieses Messverfahren vermisst nur die Winkelkomponenten und stellt diese für die Korrektur zur Verfügung, wie im Folgenden Bezug nehmend auf Fig. 9 noch detaillierter dargestellt wird.

Fig. 9 zeigt schematisch wie mit dem Referenzkollimator 20, umfassend eine Kollimatorlichtquelle 22 und eine Linse 27, ein Strahl 23 ins Unendliche abgebildet wird. Der Verdrehwinkel 25 wird dadurch bestimmt, indem in der Vorrichtung zur Messung der Verdrehung von Sender/Empfänger 24 die Spotlage 26 vermessen wird. Diese Spotlage ist proportional zum Verdrehwinkel 25.

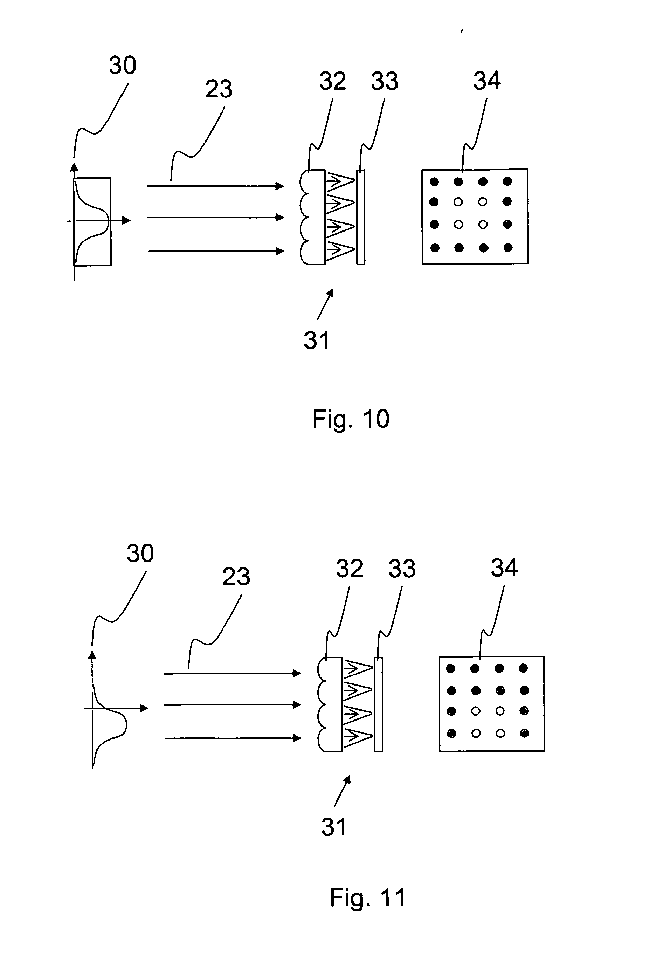

Fig. 10 und Fig. 11 zeigen einen kollimierten Strahl 23 mit einem Strahlprofil 30, das mit Hilfe eines Microlinsenarrays 32 auf einem Hartmann-Shack Detektor 33 als Flächensensor abgebildet wird. Die integrale Energie, die in jedem Spot auf dem ortsauflösenden Detektor 33 nachgewiesen werden kann, ist proportional zur integralen Energie des zugehörigen Teils des Microlinsenarrays 32. Eine solche Energieverteilung der Spots 34 wird verwendet, um die Energieverteilung in der Ebene der Apertur des Microlinsenarrays 32 zu ermitteln.

Fig. 10 zeigt eine mittige Energieverteilung, während Fig. 11 eine asymmetrische Verteilung schematisch wiedergibt.

Die Ausführungsform der Erfindung ermöglicht auf sehr einfache Weise eine Verbesserung der Genauigkeit eines Systems zur Berechnung der Verformung eines Rotorblatts, wenn primär Winkelfehler und überlagerte laterale Fehler zu kompensieren sind.

### Bezugszeichenliste:

- 1: Einrichtung zur Messung der Verformung eines Rotorblatts
- 2: Rotorblatt
- 3: Sender
- 4: Empfänger des Messkanals
- 5: Reflektor (=Messmarke)
- 6: Reflektorposition 1
- 7: Reflektorposition 2
- 8: Reflektionswinkel
- 9: Linse des Messkanals
- 10: Spotposition auf Empfänger 1
- 11: Spotposition auf Empfänger 2
- 12: Messbereich
- 13: Nabe
- 14: Schott (= Plattform)
- 15: Pfeil (= Winkelverdrehung)
- 16: weiterer Reflektor (= Referenzreflektor, Referenzmarke)
- 17: Messbereich (= Referenzpfad)
- 18: Flansch
- 19: Pfeil (= laterale Verschiebung)
- 20: Referenzkollimator
- 21: Referenzfläche
- 22: Kollimatorlichtquelle
- 23: Abbildung ins Unendliche / kollimierter Strahl
- 24: Vorrichtung zur Messung der Verdrehung von Sender/Empfängerkanal
- 25: Verdrehwinkel
- 26: Spotlage auf dem Empfänger des kollimierten Strahls
- 27: Linse Referenzkollimator
- 28: Linse Referenzpfad
- 29: Empfänger Referenzpfad
- 30: Strahlstärkeprofil Referenzkollimator
- 31: Hartmann-Shack Detektor
- 32: Microlinsenarray
- 33: Flächensensor
- 34: Spots auf Flächensensor mit Energieverteilung

## Patentansprüche

1. Einrichtung zur Messung der Verformung eines Rotorblatts bei Belastung, insbesondere des Rotorblatts einer Windkraftanlage, umfassend zumindest einen am Rotorblatt angeordneten Sender und zumindest einen Empfänger,
**dadurch gekennzeichnet, dass** die Einrichtung Mittel zur Messung einer Verdrehung und/oder lateralen Verschiebung des Senders und/oder Empfängers zu einer Rotorblatt-Bezugsachse aufweist.

2. Einrichtung zur Messung der Verformung eines Rotorblatts nach dem vorstehenden Anspruch, **dadurch gekennzeichnet, dass** zumindest die Verdrehung des Senders und/oder Empfängers unabhängig von der lateralen Verschiebung messbar ist.

3. Einrichtung zur Messung der Verformung eines Rotorblatts nach einem der vorstehenden Ansprüche, **dadurch gekennzeichnet, dass** die Mittel zur Messung einer Verdrehung und/oder lateralen Verschiebung einen Referenzpunkt, insbesondere als Lichtpunkt ausgebildet, umfassen, welcher über einen Kollimator ins Unendliche und auf einen Flächensensor abgebildet wird.

4. Einrichtung zur Messung der Verformung eines Rotorblatts nach dem vorstehenden Anspruch, **dadurch gekennzeichnet, dass** der Referenzpunkt mittels eines Referenzkollimators abbildbar ist, insbesondere mittels eines als LED-Lichtquelle ausgebildeten Referenzkollimators.

5. Einrichtung zur Messung der Verformung eines Rotorblatts nach einem der vorstehenden beiden Ansprüche, **dadurch gekennzeichnet, dass** Mittel zur Messung einer Verdrehung und/oder lateralen Verschiebung einen Reflektor und/oder eine Lichtquelle umfassen, welche gegenüber Sender und/oder Empfänger in geringerem Abstand als der Referenzpunkt angeordnet ist.

6. Einrichtung zur Messung der Verformung eines Rotorblatts nach dem vorstehenden Anspruch, **dadurch gekennzeichnet, dass** der Referenzpunkt an der Nabe des Rotors angeordnet ist.

7. Einrichtung zur Messung der Verformung eines Rotorblatts nach einem der vorstehenden Ansprüche, **dadurch gekennzeichnet, dass** der Empfänger einen Sensor mit einem zweiten Messkanal umfasst, der auf den Referenzpunkt ausgerichtet ist.

8. Einrichtung zur Messung der Verformung eines Rotorblatts nach einem der vorstehenden Ansprüche, **dadurch gekennzeichnet, dass** der Empfänger zwischen einem nabenseitig angeordneten Referenzpunkt und einem flügelseitig angeordneten Messpunkt angeordnet ist.

9. Einrichtung zur Messung der Verformung eines Rotorblatts nach dem vorstehenden Anspruch, **dadurch gekennzeichnet, dass** am Messpunkt ein Reflektor und/oder eine Lichtquelle angeordnet ist.

10. Einrichtung zur Messung der Verformung eines Rotorblatts nach einem der vorstehenden Ansprüche, **dadurch gekennzeichnet, dass** der Sender und/oder Empfänger an einer zwischen Nabe und Rotorblatt liegenden Plattform angeordnet ist.

11. Einrichtung zur Messung der Verformung eines Rotorblatts nach einem der vorstehenden Ansprüche, **dadurch gekennzeichnet, dass** der Sender als Lichtquelle, insbesondere als Laserdiode oder Leuchtdiode ausgebildet ist.

12. Einrichtung zur Messung der Verformung eines Rotorblatts nach einem der vorstehenden Ansprüche, **dadurch gekennzeichnet, dass** der Empfänger als optischer Flächensensor, insbesondere als CCD-Sensor, ausgebildet ist.

13. Einrichtung zur Messung der Verformung eines Rotorblatts nach einem der vorstehenden Ansprüche, **dadurch gekennzeichnet, dass** über das Intensitätsprofil eines Flächensensors, insbesondere eines Hartmann-Shack Sensors, eine Verdrehung und eine laterale Verschiebung messbar sind.

14. Einrichtung zur Messung der Verformung eines Rotorblatts nach einem der vorstehenden Ansprüche, **dadurch gekennzeichnet, dass** die Einrichtung zumindest einen Sender, Empfänger und/oder eine Lichtquelle, insbesondere einen Referenzkollimator, umfasst, welche Mittel zur Stromerzeugung aufweist, um mit Energie versorgt zu werden.

15. Verfahren zur Messung der Verformung eines Rotorblatts, insbesondere mittels einer Einrichtung zur Messung der Verformung nach einem der vorstehenden Ansprüche, umfassend die Schritte:
- Senden eines Signals, insbesondere eines Lichtstahls, welches von einem Abschnitt des Rotorblatts zu einem Empfänger läuft,
- Bestimmen einer Verformung, insbesondere Bestimmen einer Verbiegung des Rotorblatts anhand einer Positionsänderung des empfangenen Signals, **dadurch gekennzeichnet, dass** eine durch eine Verformung des Rotorblatts verursachte Verdrehung eines Senders zum Senden des Signals und/oder eines Empfängers zum Empfangen des Signals gemessen wird, indem ein Referenzpunkt auf einen Flächensensor des Empfängers abgebildet wird.
